# EUROPEAN PATENT APPLICATION

(11) **EP 1 578 073 A1**
(43) Date of publication of application: **21.09.2005**
(21) Application number: 05251607.7
(22) Date of filing: 17.03.2005
(51) Int. Cl.: H04L 12/58, H04L 12/18

(54) **Method and apparatus for event-triggered tasks notificationion**

(30) Priority: 18.03.2004 US 554232 P
(71) Applicant: Avaya Technology Corp., Basking Ridge, NJ 07920 (US)
(72) Inventor: Stewart Michael L., Raleigh, NC 27617 (US); Joann J. Ordille, South Orange, NJ 07079 (US)
(74) Representative: Williams, David John

(57) **Abstract**

Methods and apparatus are provided for just-in-time education. The just-in-time education provides instruction or reminders of tasks to be completed, preparations to be made or a sequence of actions to follow in response to an urgent notification. Information associated with an event, such as an emergency event, is provided to one or more recipients (120), in response to an occurrence of the event. The information comprises a listing of a plurality of tasks to be completed by the recipient(s), for example, in the form of a checklist or a tutorial. A notification message containing the information is generated and processed based on a communication flow expression. The recipient(s) can respond with an indication of completed tasks or a status update.

## Description

### Cross Reference to Related Applications

This application claims the benefit of United States Provisional Application Number 60/554,232, filed March 18, 2004, and is related to United States Patent Application Serial No. 10/184,236, filed June 26, 2002, entitled "Method and Apparatus for Automatic Notification and Response;" and United States Patent Application Serial No. 10/184,325, filed June 26, 2002, entitled "Method and Apparatus for Automatic Notification and Response Based on Communication Flow Expressions," and United States Patent Application Serial No. , entitled "Method and Apparatus for Automatic Notification and Response Based On Communication Flow Expressions Having Dynamic Context," United States Patent Application Serial No. , entitled "Method and Apparatus for Dynamically Adjusting Membership of a Communication Flow Expression," and United States Patent Application Serial No. , entitled "Method and Apparatus for Subscribing to Dynamic Attributes," each filed contemporaneously herewith, and each incorporated by reference herein.

### Field of the Invention

The present invention relates generally to communication methods and systems, and more particularly, to methods and systems that provide educational information associated with an event, such an emergency, to one or more users.

### Background of the Invention

Applications often need to contact people and have requirements for how the contact is done and what responses, if any, are collected. For example, an application may need to contact someone immediately in a crisis or may want to remind someone of a task at an appropriate time. Recipients, on the other hand, have their own preferences about how and when they are contacted. For example, recipients may want particular people, such as a family member, to be given more flexibility in establishing real-time contact.

A number of notification systems have been proposed or developed to enable applications to communicate with one or more recipients. United States Patent Application Serial No. 10/184,236, filed June 26, 2002, entitled "Method and Apparatus for Automatic Notification and Response;" and United States Patent Application Serial No. 10/184,325, filed June 26, 2002, entitled "Method and Apparatus for Automatic Notification and Response Based on Communication Flow Expressions," disclose notification and response systems. Generally, the disclosed notification and response systems (i) send requests to one or more recipients, using the medium specified by each individual recipient in accordance with the individual's preferences; (ii) collect and processes responses; and (iii) forward the responses to their final destination by means of the medium specified by the final destination in accordance with the final destination's preferences.

In addition, recent advances in telecommunication systems permit important messages to be provided to an entire community during an emergency. For example, a number of techniques have been proposed or suggested to automatically inform the public of an emergency situation, or to provide a public service message. Typically, such community notification systems maintain a database containing a telephone number or electronic mail address (or both) of each member of the relevant community. Thereafter, in the event of an emergency affecting the community, a recorded message is sent to each specified telephone number or electronic mail address. For example, United States Patent Numbers 5,559,867 and 5,912,947, assigned to Sigma/Micro Corp., of Indianapolis, IN, describe a public notification system that automatically initiates telephone calls to telephone numbers identified in a database of users. Similarly, United States Patent Number 6,463,462, assigned to Dialogic Communications Corporation of Franklin, TN, describes an automated system for delivering messages to a community of users. For example, if there is an accident at an industrial site in a particular community, a community notification system can automatically call all residents within a certain radius of the site and play a recorded message providing information about the emergency.

While such community notification systems can be effectively employed to notify a large number of people in the event of a catastrophic emergency or another event affecting an entire community, they cannot effectively notify an individual or a small group of people of how to act in the case of a particular event. In addition, currently available community notification systems provide the same message to all community members using static contact information, and are unable to tailor the message to a variety of roles with different action requirements. Existing work in emergency and urgent notification and response applications have focused on informing recipients of the emergency and directing them to a particular action.

A need therefore exists for methods and apparatus that provide educational information associated with an event, such as an emergency or an urgent situation requiring a detailed response, to recipients. A further need exists for methods and apparatus that remind recipients of tasks to be completed, preparations to made, or a sequence of actions to follow.

### Summary of the Invention

Generally, methods and apparatus are provided for just-in-time education. The just-in-time education provides instruction or reminders of tasks to be completed, preparations to be made or a sequence of actions to follow in response to an urgent notification. Information associated with an event, such as an emergency event, is provided to one or more recipients, in response to an occurrence of the event. The information comprises a listing of a plurality of tasks to be completed by the recipient(s), for example, in the form of a checklist or a tutorial. In response to an occurrence of the event, a notification message containing the information is generated and processed based on a communication flow expression. The notification message is sent to each of the recipients. The recipient(s) can respond with an indication of completed tasks or a status update.

A more complete understanding of the present invention, as well as further features and advantages of the present invention, will be obtained by reference to the following detailed description and drawings.

### Brief Description of the Drawings

FIG. 1 illustrates a notification and response system incorporating features of the present invention; and
FIG. 2 illustrates the distribution of one or more checklists during different phases of a communication, in accordance with the present invention.

### Detailed Description

The present invention provides just-in-time education for instructing or reminding recipients of tasks to be completed, preparations to be made or a sequence of actions to follow in response to an urgent notification. The instructions can come in the form of a checklist or, as an alternative, as an online tutorial for the recipient.

The just-in-time education can also be used to provide for education for non-urgent tasks at times convenient to the recipient, as would be apparent to a person of ordinary skill in the art. In addition, the just-in-time education of the present invention can be used by individuals to send reminders to themselves of task lists that need to be completed. In yet another variation of the present invention, the checklists associated with the just-in-time education can serve as action items for an individual to complete.

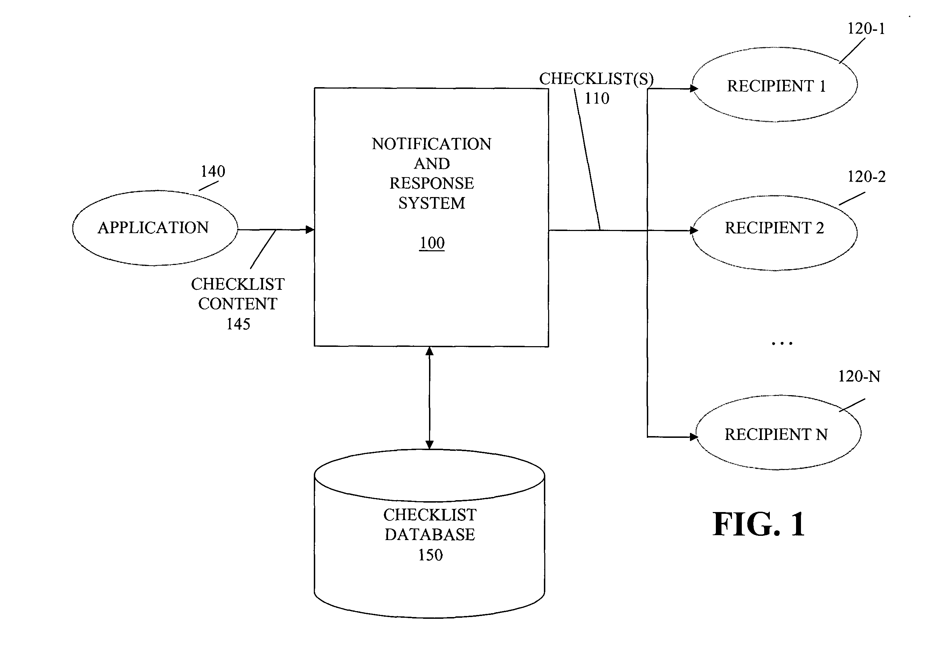

FIG. 1 illustrates an exemplary notification and response system 100 incorporating features of the present invention. As shown in FIG. 1, the notification and response system 100 can provide one or more checklists 110 containing a checklist of tasks (and optionally their sequencing) to one or more recipients 120-1 through 120-N (hereinafter, collectively referred to as recipients 120) via one or more media. The checklist 120 can take the form of an HTML list of items to be acknoweldged as completed (checked) or a list that can be reviewed by telephone and acknowledged as completed. Similarly, lists may be conveyed by other media such as IM, and responses can be returned via a method appropriate to those media, or via an alternate media such as the telephone.

The checklist(s) may be retrieved, for example, from a checklist database 150 that stores various checklists on various topics, for example, indexed by emergency type. In a further variation shown in FIG. 1, the content 145 for the checklist 110 can be provided by an application 140 that is requesting the notification and response system 100 to distribute the checklist notification.

The exemplary notification and response system 100 may be embodied, for example, as the Xui™ notification and response system, commercially available from Avaya, Inc. of Basking Ridge, NJ, as modified herein to provide the features and functions of the present invention. The Xui™ notification and response system, as well as the processing of communication flows by the notification and response system 100 in accordance with a communication flow expression, is described, for example, in United States Patent Application Serial No. 10/184,236, filed June 26, 2002, entitled "Method and Apparatus for Automatic Notification and Response;" United States Patent Application Serial No. 10/184,325, filed June 26, 2002, entitled "Method and Apparatus for Automatic Notification and Response Based on Communication Flow Expressions," or United States Patent Application Serial No. , filed contemporaneously herewith and entitled "Method and Apparatus for Automatic Notification and Response Based on Communication Flow Expressions Having Dynamic Context," each incorporated by reference herein.

Generally, as shown in FIG. 1, the notification and response system 100 enables one or more applications 140 to communicate with one or more recipients 120 by a number of different media, such as electronic mail, telephone, web page, pager or facsimile. Generally, the notification and response system 100 (i) sends one or more requests containing, for example, a checklist 110, to one or more recipients 120, using the medium specified by each individual recipient 120 in accordance with the individual's preferences (and recorded for example, in a recipient preference and role database (not shown)); (ii) collects and processes responses to the request; and (iii) forwards the responses to their final destination by means of the medium specified by the final destination in accordance with the final destination's preferences. Roles provide a way of categorizing users and what they are allowed to do. The recipient preference and role database also allows roles that are specified in a communication flow to be resolved to individual recipient names at the time the requests are transmitted.

The application 140 can create notification requests and submit them to the notification and response system 100. The notification requests must contain a communication flow to execute. Once the notification and response system 100 receives a notification request, the notification and response system 100 executes the communication flow logic to notify the recipients 120 and collect their responses.

As discussed hereinafter, the checklist 110 can be delivered for immediate completion and acknowledgment. The checklist 110 can be received by the recipients 120, and then acknowledged later by call back via phone or contact back to the notification and response system 100 by the web, or by other appropriate means, such as an instant message (IM).

In various implementations, the checklist 110 can first be delivered as a set of one or more instructions, with a follow up message to ascertain the level of completion of the instructions. The checklist 110 can also be delivered with an option for immediate or subsequent follow up at the discretion of the recipient, using appropriate communication flow expression functionality, as provided by the notification and response system 100. Further, the list can be delivered and the response can indicate that some, but not all, items have been completed. In this manner, subsequent follow up messages can ask only about uncompleted items.

In a further variation, the checklists 110 could convey a group of tasks from a database of tasks, each task with its own unique identifier, that need to be completed in a disaster or other urgent response scenario. As the tasks are acknoweldged as complete, the database is updated to reflect the progress made on the entire set of tasks. When the response scenario relates to an urgent matter that is distributed in geography or within a building, a visualization of the tasks pending and completed can be presented on a map as updates come in to allow a urgent response center to track progress.

In one exemplary use of communication flows to support checklists, a single user, user1, is sent a checklist 110 containing a number of items, n. The communication flow sends the user a checklist, collects a response comprised of checks for completed items, and reminds the user every hour until all items are checked. The application 140 may supply the content 145 of the checklist 110 and return a total running count of all items that have been checked. The application 140 can maintain the count in a number of ways. One exemplary way would be to count the number of checked items in the responses so far, and then add the count of newly checked items to it. The total is returned in the response in the attribute totalchecked. An exemplary communication flow for this example may be expressed as:
(user1 OR THIS AFTER +01:00)? number(response('totalchecked')) = n?

Extending this example, several users, user1 through userk, are sent checklists 110 of n items. The users each receive reminders every hour until they complete all their checklist items. In the following exemplary communication flow, labels and a group of IF-THEN-ELSE expressions are used to separate the communication flow into sub-communication flows for reminding each user until the user has completed the checklist, as follows:

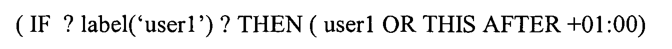

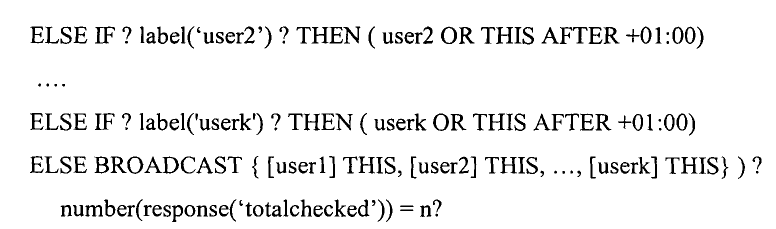

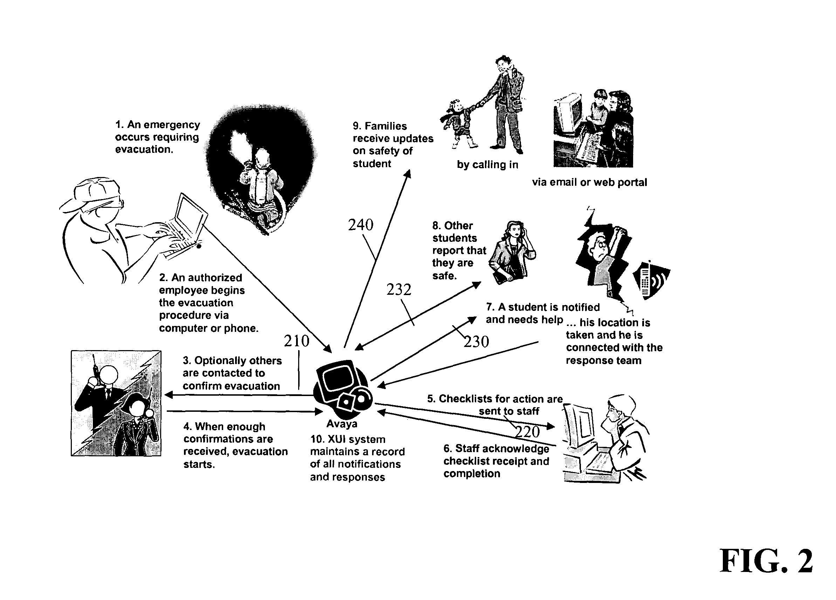

The application 140 could generate individual requests for each role in an urgent response, as discussed further below in conjunction with FIG. 2. Each request to a separate role might have a different number of checklist items. In another exemplary use of communication flows, the application 140 could generate one communication flow for different checklists 110 to a variety of roles. In this communication flow, labels and a group of IF-THEN-ELSE expressions are used to separate the communication flow into sub-communication flows for reminding the individuals in each role until they have completed the checklist for the role. Each role may have a different number of checklist items. Individuals who fill the roles are found by a search of the recipient preference and role database where, in this case, "role" corresponds to an organizational unit. Since multiple people may respond to checklists 110 for the role, the communication flow indepedently checks each checklist item by name to be sure that it has been done. This avoids race conditions that could result if multiple members of the role report that the same item is complete. Since the checklists 110 are different for each role, the communication flow tests that the complete set of checklist items is done for each role, as follows: 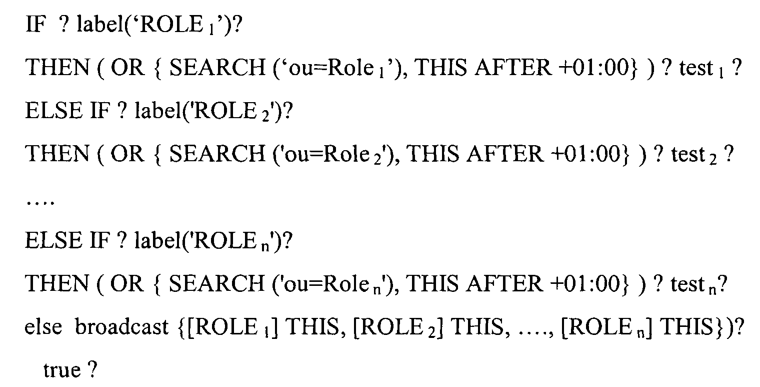 where each test includes checklist names itemsᵢⱼ for the role, i, and the number, j, of the checklist item for that role. For example, testᵢ for ROLEᵢ with k total checklist items follows:

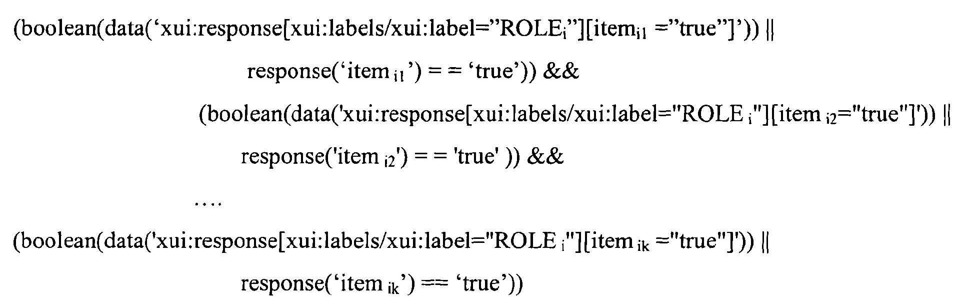

In other examples of just-in-time education, the technique could be applied to surveying a population within a geography or searching a geographic area, e.g., for a missing child, visualization could be used to track survey responses as they come in by updating a map to reflect aggregates of survey responses by geography, or search areas completed or clues found. Other kinds of visualizations of task completions unrelated to geography are possible, such as visualizing the completion of a hierarchircally structured task or the completion of a long list with color.

The just-in-time education of the present invention can also be used to provide automated flash card type training comprised of prompts for answers to questions, or items to acknowlege reviewing. This is particularly useful when coupled with the ability to schedule delivery of notifications at a convenient time, such as the scheduling facilities provided by the Avaya Xui Notification and Response System™. Just-in-time education can be further used by individuals to send reminders to themselves of lists of tasks to be accomplished, such as a shopping list. Delivery could be scheduled for the expected time of shopping, or the individual could access a web or voice portal, similar to that available in the Avaya Xui Notification and Response System, when access to the task list is desired.

When more sophisticated training is necessary, the just-in-time education reminder could link the recipient to a sophisticated tutorial system via phone or web. In this case, the tutorial system would generate the response to the notification and response system. The response would include an indication of whether follow up was necessary, perhaps a time for the next follow up, and an identifier to be conveyed to the tutorial system when follow up occurs. The identifier would allow the tutorial system to continue instruction from the appropiate point.

Checklists can be generated and delivered using the techniques of the Avaya Notification and Response System. Follow ups can be automatically scheduled using the techniques of the Avaya Notification and Response System. Results can be automatically posted to a tracking database as they come using techniques in the Avaya Notification and Response System. This particular application has additional novelty in the combination of these features to affect a Just in Time Education System.

In a hospital or medical setting, the checklists 110 of the present invention can remind recipients of tasks to be completed, preparations to made, or a sequence of actions to follow in certain situations. For example, a checklist of items can be distributed to the appropriate personnel in the event a child is abducted in the hospital and a lock down is required. In addition, if a patient is scheduled for a medical procedure, a pre-procedure checklist of things the patient must do prior to surgery can be sent, for example, 24, 12, 4, and 1 hours before surgery, identifying different things that need to be done. The just-in-time education of the present invention can also be used, for example, to notify the family or parents when important information becomes available, or to locate them, so that a staff person can speak with them.

FIG. 2 illustrates the distribution of one or more checklists during different phases of a communication, in accordance with the present invention. For a more detailed discussion of the use of labels in a notification and response system 100, see United States Patent Application Serial No. , entitled "Method and Apparatus for Automatic Notification and Response Based on Communication Flow Expressions Having Dynamic Context," incorporated by reference herein.

As shown in FIG. 2, assume an application 140 has four different types of interactions that are planned with recipients 120 depending on the phase of the communication or other criteria. In FIG. 2, a first group is contacted during step 210 and asked to confirm evacuation, a second group is sent checklists 110 of actions to follow during step 220, a third group is asked for their location, condition and whether they need assistance during steps 230 and 232, and a fourth group receives reports on the condition of the third group during step 240. The communication flow subexpression for contacting each group can be preceded by a label identifying their role in the communication. The application can then use the label to determine which interaction to have with the recipient.

### System and Article of Manufacture Details

As is known in the art, the methods and apparatus discussed herein may be distributed as an article of manufacture that itself comprises a computer readable medium having computer readable code means embodied thereon. The computer readable program code means is operable, in conjunction with a computer system, to carry out all or some of the steps to perform the methods or create the apparatuses discussed herein. The computer readable medium may be a recordable medium (e.g., floppy disks, hard drives, compact disks, or memory cards) or may be a transmission medium (e.g., a network comprising fiber-optics, the world-wide web, cables, or a wireless channel using time-division multiple access, code-division multiple access, or other radio-frequency channel). Any medium known or developed that can store information suitable for use with a computer system may be used. The computer-readable code means is any mechanism for allowing a computer to read instructions and data, such as magnetic variations on a magnetic media or height variations on the surface of a compact disk.

The computer systems and servers described herein each contain a memory that will configure associated processors to implement the methods, steps, and functions disclosed herein. The memories could be distributed or local and the processors could be distributed or singular. The memories could be implemented as an electrical, magnetic or optical memory, or any combination of these or other types of storage devices. Moreover, the term "memory" should be construed broadly enough to encompass any information able to be read from or written to an address in the addressable space accessed by an associated processor. With this definition, information on a network is still within a memory because the associated processor can retrieve the information from the network.

It is to be understood that the embodiments and variations shown and described herein are merely illustrative of the principles of this invention and that various modifications may be implemented by those skilled in the art without departing from the scope and spirit of the invention.

## Claims

1. A method for providing information associated with an event to one or more recipients, said method comprising the steps of:
obtaining said information associated with said event, wherein said information comprises a listing of a plurality of tasks to be completed by said one or more recipients;
in response to an occurrence of said event, generating a notification message containing said information;
processing said notification message based on a communication flow expression indicating how said notification message should be processed; and
sending said notification message to each of said one or more recipients.

2. The method of claim 1, wherein said information is a checklist of items related to said event.

3. The method of claim 1, wherein said information is a tutorial containing educational information related to said event.

4. The method of claim 1, further comprising the step of generating a visualization of one or more pending tasks.

5. The method of claim 1, further comprising the step of generating a visualization of one or more completed tasks.

6. The method of claim 1, wherein said information identifies one or more action items for an individual to complete.

7. The method of claim 1, wherein said event is an emergency event.

8. The method of claim 1, wherein said information contains one or more of tasks to be completed, preparations to be made, or a sequence of actions to follow.

9. The method of claim 1, wherein said information is provided to said one or more recipients in accordance with preference information specified by each of said one or more recipients.

10. The method of claim 9, wherein said preference information includes one or more of at least one media preference and at least one human language type preference.

11. The method of claim 1, further comprising the step of receiving at least one response to said notification message.

12. The method of claim 11, wherein said response to said notification message identifies one or more completed tasks.

13. The method of claim 1, further comprising the step of receiving at least one status update from at least one of said one or more recipients.

14. A method for providing information associated with an event to one or more recipients, said method comprising the steps of:
obtaining said information associated with said event, wherein said information comprises a listing of a plurality of tasks to be completed by said one or more recipients;
generating a notification message containing said information;
processing said notification message based on a communication flow expression indicating how said notification message should be processed;
sending said notification message to each of said one or more recipients; and
receiving at least one response to said notification message from one or more of said recipients indicating at least one of said tasks that have been completed.

15. The method of claim 14, further comprising the step of sending one or more follow up notification messages to each of said one or more recipients indicating at least one of said plurality of tasks that remain to be completed.

16. The method of claim 14, wherein said information is a checklist of items related to said event.

17. The method of claim 14, wherein said information is a tutorial containing educational information related to said event.

18. The method of claim 14, further comprising the step of generating a visualization of one or more pending or completed tasks.

19. The method of claim 14, wherein said event is an emergency event.

20. The method of claim 14, wherein said information contains one or more of tasks to be completed, preparations to be made, or a sequence of actions to follow.

21. The method of claim 14, wherein said information is provided to said one or more recipients in accordance with preference information specified by each of said one or more recipients.

22. The method of claim 14, further comprising the step of receiving at least one status update from at least one of said one or more recipients.

23. An apparatus for providing information associated with an event to one or more recipients, said apparatus comprising:
a memory; and
at least one processor, coupled to the memory, operative to:
obtain said information associated with said event, wherein said information comprises a listing of a plurality of tasks to be completed by said one or more recipients;
in response to an occurrence of said event, generate a notification message containing said information;
process said notification message based on a communication flow expression indicating how said notification message should be processed; and
send said notification message to each of said one or more recipients.

24. The apparatus of claim 23, wherein said information is a checklist of items related to said event or a tutorial containing educational information related to said event.

25. The apparatus of claim 23, processor is further configured to generate a visualization of one or more pending tasks.

26. The apparatus of claim 23, processor is further configured to generate a visualization of one or more completed tasks.

27. The apparatus of claim 23, wherein said information identifies one or more action items for an individual to complete.

28. The apparatus of claim 23, wherein said information contains one or more of tasks to be completed, preparations to be made, or a sequence of actions to follow.

29. The apparatus of claim 23, processor is further configured to receive at least one response to said notification message.

30. The apparatus of claim 29, wherein said response to said notification message identifies one or more completed tasks.

31. The apparatus of claim 23, processor is further configured to receive at least one status update from at least one of said one or more recipients.
